Europäisches Patentamt

(19) European Patent Office

Office européen des brevets

(11) Publication number: 0 397 312
A1

## (12) EUROPEAN PATENT APPLICATION

(21) Application number: 90303106.0

(22) Date of filing: 22.03.90

(51) Int. Cl.⁵: C04B 35/48

(30) Priority: 12.05.89 US 350958

(43) Date of publication of application:
14.11.90 Bulletin 90/46

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Quadir, Tariq
10917 Brennan Court
Columbia, Maryland 21044(US)

(74) Representative: Haines, Arthur Donald et al
Patent Section Vauxhall Motors Limited 1st
Floor Gideon House 26 Chapel Street
Luton, Bedfordshire LU1 2SE(GB)

(54) Low-temperature sintering of toughened zirconia.

(57) A transformation-toughened zirconia body consists essentially of zirconia containing greater than 2 mole percent yttria and a mixture of calcia, alumina, and silica. The body has a fine-grained microstructure and a high sintered density.

EP 0 397 312 A1

## LOW-TEMPERATURE SINTERING OF TOUGHENED ZIRCONIA

Technical Field

The present invention relates to a transformation-toughened zirconia body and a method of making the same. More specifically, the present invention relates to a novel additive to a transformation-toughened zirconia body which lowers the necessary sintering temperature and toughens the dry zirconia body.

Background of the Invention

Crystallites of zirconia can be stabilized by yttria in the range of 2.0 to 2.8 mole percent yttria. The metastable tetragonal phase can be retained at room temperature if the grain size/particle size is small enough. This tetragonal phase undergoes a stress-induced transformation to the stable monoclinic form when stresses associated with a propagating crack front provides the driving force, subsequently stopping the crack propagation and toughening the material. Two types of microstructures having transformation-toughened zirconia are normally found; fully (100%) tetragonal, and (2) tetragonal coherent precipitates in large cubic grains.

There is a critical grain size requirement for fully tetragonal material; that is, there should be a matrix constraint to retain the metastable phase at room temperature since there is about a 4% volume increase when tetragonal/monoclinic transformation occurs.

Yttria has been used to stabilize the all-tetragonal microstructure of a zirconium system because of its superior sintering characteristics and excellent mechanical properties. However, the advantages of yttria-stablized transformation-toughened zirconia systems have been affected by the high cost of yttria and the low-temperature stability of yttria.

The sintering temperature of zirconia is in the range of 1550°C to 1770°C. An article by Pena et al in Journal of Materials Science 20 (1985) 2011-2022 discloses fully-dense, zirconia-toughened ceramics with a mullite matrix. The article discusses reaction sintering separating reaction steps and densification steps. The reaction uses a combination of zircon, alumina, and calcium carbonate. More specifically, the reaction includes a mixture of 4.7 weight percent to 2.4 weight percent calcia, 34.09 weight percent to 39.7 weight percent alumina, 20.05 weight percent to 18.97 weight percent silica and 41.2 weight percent to 38.96 weight percent zirconia (unstabilized). The resulting body produces less than 21% tetragonal phase having a microstructure including large porosity and large mullite grains. The produced article is very low-strength (270-235 Mpa) and the final product is toughened mullite.

The present invention provides a novel additive for low-temperature sintering of toughened zirconia which reduces the sintering temperature and does not require any special processing or the use of ultra-fine powders.

Summary of Invention

In accordance with the present invention, there is provided a transformation-toughened zirconia body consisting essentially of zirconia containing greater than 2 mole percent yttria and sintering aid means for lowering the necessary sintering temperature of the body. The sintering aid means consists essentially of a mixture of calcia, alumina, and silica. The body has a fine-grain microstructure and a high sintered density.

The present invention further provides a method of making the transformation-toughened zirconia body including the steps of pre-mixing calcia, silica and alumina, forming a ternary eutectic composition from the mixture, and infiltrating a transformation-toughened zirconia powder with the ternary eutectic composition while sintering to form the zirconia body having a defined grain microstructure and a high sintered density.

Detailed Description of the Invention

The present invention provides a transformation-toughened zirconia body consisting essentially of zirconia containing greater than 2 mole percent yttria. The body further includes sintering aid means for lowering the necessary sintering temperature of the body. The sintering aid means consists essentially of a mixture of calcia, alumina, and silica. The body has a fine-grained microstructure in high sintered density.

The mixture includes less than 30 mole percent calcia and 40 mole percent silica. The concentration of calcia was kept lower than 30 mole percent since de-stabilization of the metastable tetragonal zirconia in the parent transformation-toughened zirconia body occurs with additions as low as 2.0 weight percent calcia. The silica concentration was kept below 40 mole percent because a large amount of porosity was observed in the transformation-toughened zirconia material if the concentration of silica exceeded 40 mole percent. The large amount of porosity was observed with sintering aid concentration in the parent transformation-toughened zirconia as low as 2.0 weight percent.

The addition of calcia, alumina and silica composition to the transformation toughened zirconia body in the amount of 2.0 to 10.0 weight percent as a sintering aid produces a sintering temperature from 1500°C to 1400°C. This low-temperature sintering technique would not require any special processing or the use of ultra-fine powders.

Preferably, the composition ranges of calcia, aluminia, and silica in the sintering aid composition are: calcia 25 to 30 mole percent, silica 31 to 33 mole percent and alumina 34 to 40 mole percent.

The method of making the transformation-toughened zirconia body generally includes the steps of pre-mixing the calcia, silica and alumina and forming a ternary eutectic composition from the mixture. The ternary eutectic composition is formed at 1395°C to facilitate liquid-phase sintering. During the liquid-phase sintering of the pre-formed zirconia body, the ternary eutectic composition infiltrates the transformation-toughened zirconia powder thereby forming a fine grain microstructure having a high sintered density.

Prior to forming the ternary eutectic composition, the pre-mix of calcia, silica, and alumina is calcined at 900°C for three hours. The sintering aid mixture is then added to the parent transformation-toughened zirconia powder in the above disclosed concentration. The low-temperature sintering is accomplished by liquid-phase sintering. The low-temperature sintering produces a fine grained microstructure which helps the low-temperature stability of the zirconia body significantly.

It has been experimentally determined that the sintering aid pre-mix of calcia, silica, and alumina sinters 2.5 mole percent yttria-stabilized transformation-toughened zirconia to a very high sintered density of over 98% of the theoretical and produces a very stable microstructure at low temperatures of 200° to 300°C. The composition obtained is over 80% tetragonal, being a density of over 98.5% of the theoretical density and having fine equi-axed tetragonal grains of around 0.25 micrometres in size. There is some cubic phase found as well.

Experiments were conducted wherein the pre-mix of calcia, alumina, and silica composition was added to the parent transformation-toughened zirconia body in accordance with the present invention in amounts ranging from 2.0 to 10.0 weight percent amount. The following properties were measured.

Modulus of Rupture (4 pt) at 25°C = 100 ksi

Klc (fracture toughness) at 25°C = 6.2 Mpa m1/2
Thermal shock resistance T = 300°C
Major phase 8n x-ray analysis = Tetragonal with cubic as large minor phase
Average grain size of the tetragonal grains = 0.25 micrometres
Modulus of Rupture (4 pt) at 800°C = 58 ksi
Hardness = 100 Kg/mm2

The present invention has potential application for engine components, such as wear parts, extrusion dies, and stamping dies.

## Claims

1. A transformation-toughened zirconia body consisting essentially of: zirconia containing greater than 2 mole percent yttria; and sintering aid means for lowering the necessary sintering temperature of said body, said sintering aid means consisting essentially of a mixture of calcia, alumina, and silica, said body having a fine-grained microstructure and a high sintered density.

2. A transformation-toughened zirconia body according to claim 1, in which said mixture includes less than 30 mole percent calcia and less than 40 mole percent silica.

3. A transformation-toughened zirconia body according to claim 2, in which said body includes 2.0 to 10.0 weight percent of said mixture of calcia, alumina, and silica.

4. A transformation-toughened zirconia body according to claim 3, in which said mixture includes 25 to 30 mole percent calcia, 31 to 33 mole percent silica, and 32 to 40 mole percent alumina.

5. A method of making a transformation-toughened zirconia body according to claim 1, which comprises the steps of: preparing a mixture containing calcia, silica, and alumina; forming a ternary eutectic composition from said mixture; and infiltrating a transformation-toughened zirconia powder with the ternary eutectic composition by liquid-phase sintering to form the zirconia body having a fine-grained microstructure and a high sintered density.

6. A method of making a transformation-toughened zirconia body according to claim 5, in which the mixture of calcia, silica and alumina is calcined prior to forming the ternary eutectic composition therefrom.

7. A method of making a transformation-toughened zirconia body according to claim 5 or 6, in which said ternary eutetic composisition is formed by heating the mixture to a temperature of 1395°C.

8. A method of making a transformation-toughened zirconia body according to claim 5 or 6, in which the mixture is prepared from 25 to 30 mole percent calcia, 31 to 33 mole percent silica, and 32 to 40 mole percent alumina.

## DOCUMENTS CONSIDERED TO BE RELEVANT

EP 90303106.0

| Category | Citation of document with indication, where appropriate, of relevant passages | Relevant to claim | CLASSIFICATION OF THE APPLICATION (Int Cl⁵) |
|---|---|---|---|
| X | <u>EP - A1 - 0 140 638</u> (TOYO SODA MANUFACTURING CO., LTD.) * Claims * -- | 1 | C 04 B 35/48 |
| X | <u>EP - A1 - 0 218 853</u> (TORAY INDUSTRIES, INC.) * Claims * ---- | 1 | |

TECHNICAL FIELDS SEARCHED (Int Cl⁵)

C 04 B

The present search report has been drawn up for all claims

| Place of search | Date of completion of the search | Examiner |
|---|---|---|
| VIENNA | 08-08-1990 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document